# EUROPEAN PATENT SPECIFICATION

(11) **EP 2 179 866 B1**
(45) Date of publication and mention of the grant of the patent: **08.02.2012**
(21) Application number: 08791146.7
(22) Date of filing: 14.07.2008
(51) Int. Cl.: B60C 9/18, B60C 11/00, B60C 15/06, B60C 1/00

(54) **PNEUMATIC TIRE**
LUFTREIFEN
PNEU

(30) Priority: 13.07.2007 JP 2007184261; 30.06.2008 JP 2008170202
(43) Date of publication of application: 28.04.2010
(73) Proprietor: Bridgestone Corporation, Tokyo 104-8340 (JP)
(72) Inventor: KOUNO, Yoshihide, Kunitachi-shi Tokyo 186-0001 (JP)
(74) Representative: Whalley, Kevin
(86) International application number: PCT/JP2008/062721
(87) International publication number: WO 2009/011344

(56) References cited:
- JP-A- 03 143 703
- JP-A- 04 110 205
- JP-A- 05 201 202
- JP-A- 06 297 909
- JP-A- 06 305 304
- JP-A- 10 203 109
- JP-A- 11 208 212
- JP-A- 2000 063 569
- JP-A- 2001 018 613
- JP-A- 2005 336 347
- JP-A- 2007 161 027

## Description

### TECHNICAL FIELD

The present invention relates to a pneumatic tire having a two-belt structure, and more specifically, to a pneumatic tire optimized for running especially on ice and snow.

### BACKGROUND ART

Various technologies have been provided for a pneumatic tire to improve tire performances such as driving and breaking performances on ice and snow. For example, in JP2001-206022A, sub rubber layers composed of a sub rubber having different Young's modulus from that of a main rubber are provided in tire side portions to improve the braking performance.

Meanwhile, suppose that the tire performances can be improved without provision of such sub rubber layers, it is possible to provide a pneumatic tire having a simple constitution and improved performances.

### DISCLOSURE OF THE INVENTION

### (Problem to be Solved by the Invention)

It is an object of the present invention, with taking the above matter into account, to provide a pneumatic tire having a simple constitution and improved performances especially on ice and snow.

### (Means for Solving the Problem)

An invention recited in claim 1 provides a pneumatic tire having a two-belt structure, in which a width of a first belt is larger than a width of a second belt, and the width of the second belt is within a range of 80 to 95 % of a tread width.

The term "tread width" as used herein means the distance between tread ends as measured in the tire width direction. The term "tread ends" means the outermost ground contact portions in the tire width direction when the tire is placed on a standard rim stipulated in the JATMA Year Book (2006 edition; Japan Automotive Tire Manufactures Association standard), the tire is inflated to an internal pressure of 100% of the air pressure (maximum air pressure) corresponding to the maximum load capability (a load indicated by bold characters in table corresponding to internal pressure/load capability) in the applied size/ply rating in JATMA Year Book, and the tire bears the maximum load capability. It will be noted that when the TRA standard or the ETRTO standard is used in the location of use or the location of manufacture, these respective standards are followed.

According to the invention of claim 1, there is provided a tire structure in which the width of the second belt is smaller than the width of the first belt and the tread width, so that a width of a belt portion as a cross belt layer get smaller. Thus, even though the first belt has an enough width, the belt tension at the belt portion where the cross belt layer does not exist is reduced. Therefore, a leading angle of the tire outer surface (an angle between a road surface and a tire land portion) in the vicinity of the ground-contact end of the tire becomes smaller. This suppress intakes of water slightly produced due to the ground contact of the tire into the ground contacting plane, thereby making it possible to improve the tire performances such as the driving performance and the breaking performance.

The width of the second belt smaller than 80% of the tread width is not preferred, since a shape of the ground contacting plane is deformed largely. Also, the width of second belt larger than 95% of the tread width is not preferred, since the effect of decreasing the leading angle as discussed is reduced.

In an invention recited in claim 2, the width of second belt is within a range of 83-90% of the tread width. This range falls within a range exerting a particularly greater effect, so that the effect of the invention recited in claim 1 can be further enhanced.

In an invention recited in claim 3, the width of the first belt is within a range of 95-102% of the tread width. Due to this configuration, the shear rigidity of the belt at the shoulder region is increased, which is beneficial in terms of wear.

When the width of the first belt is smaller than 95% of the tread width, uneven wear tends to occur. On the other hand, when the width of the first belt is larger than 102% of the tread width, the first belt ends may be close to side rubbers due to a production deviation.

In an invention recited in claim 4, the first belt end and the second belt end are spaced by 6 mm or more. Thus, a tension at the shoulder is decreased further to enhance the effect of the invention recited in claim 1.

In an invention recited in claim 5, the first belt end and the second belt end are spaced by 10 mm or more. This allows the effect of the invention recited in claim 4 to be more remarkable.

In an invention recited claim 6, a bead filler height is within a range of 15-40% of a tire cross sectional height.

According to the invention recited claim 6, since the bead filler height is suppressed within the range of 15-40% of the tire cross sectional height, the radius of a case line at the tire side portion is made larger and then the tension at the side portion is increased, and the belt tension at the shoulder portion is, in turn, decreased. Therefore, it is possible to amplify the effect of the invention recited in claim 1 more.

When the bead filler height is smaller than 15% of the tire cross sectional height, it tends to be difficult to manufacture the tire. On the other hand, when the bead filler height is larger than 40% of the tire cross sectional height, the effect obtained by claim 6 unlikely to be exerted.

It is preferred that, the bead filler height (the region across which the bead filler lies) is within a range of 0.5*H or less, where H is a distance between the tire height position at the tire maximum width position and a rim outer circumference in condition of mounting the tire to the rim and setting the inflation inner pressure as 30 KPa. It is more preferred that the bead filler height is within a range of 0.4*H or less.

In an invention recited in claim 7, a dynamic elastic modulus of a tread rubber is within a range of 3-20 MPa. The reason for the enlarging the distance between the first belt end and the second belt end is to reduce the belt tension at the shoulder portion as discussed above. As a result, the ground-contact length is increased to enlarge the ground-contact area, so that a friction coefficient on ice is increased, as discussed above. Here, the harder tread rubber is difficult to be deformed, thus, it is difficult to effectively enlarge the ground-contact area with reducing the belt tension. In the summer tire which is not intended for use on ice and snow, the dynamic elastic modulus of the tread rubber is within a range of 25-50 MPa where the dynamic elastic modulus is set relatively high. In such range, even though the distance between the first belt end and the second belt end is enlarged, it is difficult to improve the tire performances on ice and snow. The dynamic elastic modulus of the tread rubber within the range of 3-20 MPa makes the tread rubber moderately soft, so that the tire performances on the ice and snow is remarkably improved by the enlargement of the distance between the first belt end and the second belt end.

### (Effects of the Invention)

According to present invention, a pneumatic tire having a simple constitution and improved tire performances especially on ice and snow can be provided.

### BRIEF DESCRIPTION OF DRAWINGS

FIG. 1 is cross-sectional view of a tire in accordance with a first embodiment in the tire radial direction;
FIG. 2 shows a foot print shape of a tread portion of the tire in accordance with the first embodiment;
FIG. 3 is a cross-sectional view of a tire in accordance with a second embodiment in the tire radial direction;
FIG. 4 is a cross-sectional view of a tire in accordance with a third embodiment in the tire radial direction;
FIG. 5 is a graph showing test results in Test Example 1.
FIG. 6 is a tire radial directional cross-sectional view in the tire radial direction schematically showing a shape of a tire mold in Test Example 2.
FIG. 7 is a graph showing test results in Test Example 3.
FIG. 8 is a graph showing test results in Test Example 5.
FIG. 9 is a side view schematically showing surface shapes of shoulder portions of respective tires in Test Example 6.
FIG. 10 shows results of measurement of tire shape in Test Example 9.
FIG. 11 shows results of measurement of tire shape in Test Example 9.
FIG. 12 shows results of measurement of tire shape in Test Example 9.
FIG. 13 shows results of measurement of tire shape in Test Example 9.
FIG. 14 is a graph showing test results in Test Example 10.
FIG. 15 is a graph showing test results in Test Example 11.

### (Reference Symbols)

- 10: Pneumatic tire
- 13: Bead filler
- 14LE: First belt end
- 14UE: Second belt end
- 30: Pneumatic tire
- 34UE: Second belt end
- 40: Pneumatic tire
- 43: Bead filler
- 1W: Width of the first belt
- 2W: Width of the second belt
- BH: Bead filler height
- SH: Tire cross sectional height
- TW: Tread width

### DESCRIPTION OF EMBODIMENTS

Hereinafter, with reference to embodiments, the mode of the present invention will be described. Like reference numerals are used throughout the description following the first embodiment to refer to similar components and those descriptions are omitted.

### <First Embodiment>

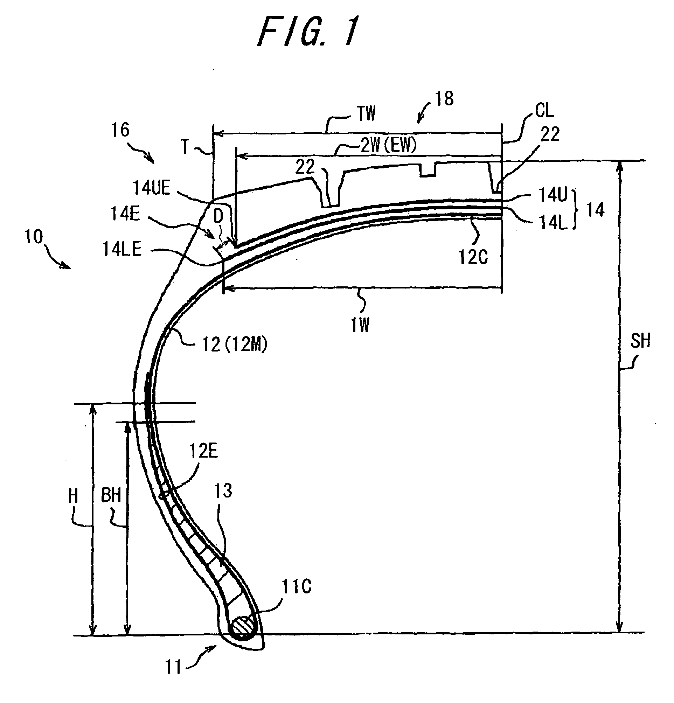

A first embodiment is described here. As shown in FIG. 1, a pneumatic tire 10 of the embodiment is a winter tire used in traveling on ice and snow road such as a snow road and an ice road.

The pneumatic tire 10 according to the first embodiment comprises a carcass 12 formed of a single-layer structure or a multilayer structure. The carcass 12 includes turn-up portions 12E in which the both side parts of the carcass are turned up respectively around a bead core 11C of a bead portion 11. In the bead portion 11, a bead filler 13 is provided between the turn-up portion 12E and a carcass body 12M.

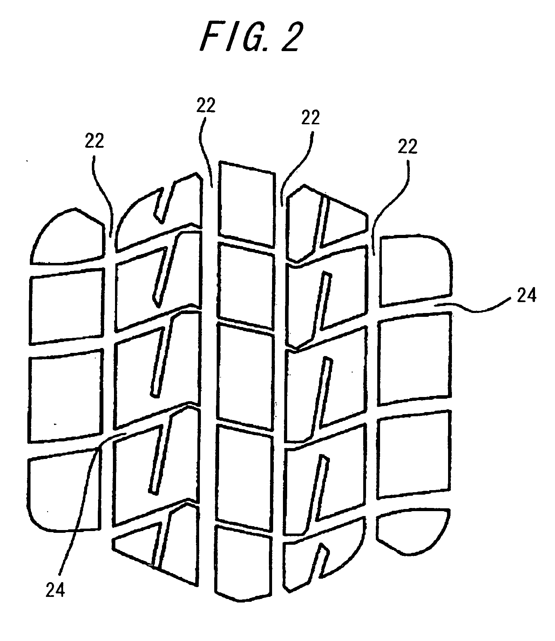

A belt layer 14 is embedded radially outside of the crown portion 12C of the carcass 12. A tread portion 18 (additionally, refer to FIG. 2) having grooves is provided radially outside of the belt layer 14.

The tread portion 18 is provided with a plurality of circumferential grooves (main grooves) 22 extending along the circumferential direction and a plurality of lateral grooves 24 (refer to FIG. 2) intersecting the circumferential direction on both sides of the tire equator CL. The end of the each lateral grooves 24 is communicated with the circumferential grooves 22 or extends across the tread ends T to drain water to outside in the tire width direction.

Although the tread width TW refers to the distance between both of the tread ends T in the tire width direction, in the present embodiment, that is the same as a distance between both of parts having the smallest radius in a square shoulder of the tire outer surface.

In the embodiment, since the belt layer 14 composed of a first belt 14L and a second belt 14U disposed on the outer side of tire radial direction of the first belt 14L, the pneumatic tire10 has a two-belt structure. A first belt width (a width of the first belt 14L) 1W is larger than a second belt width (a width of the second belt 14U) 2W, the second belt width 2W is within a range of 90-95% of the tread width TW, and an effective belt width EW is within a range of 90-95% of the tread width TW. Here, the effective belt width EW refers to a width of the belt portion where the first belt 14L and the second belt 14U are overlapped with each other.

According to this configuration, there is provided a tire structure in which the second belt width 2W is smaller than the first belt width 1W and the tread width TW, so that the width 2W of a cross belt layer formed by the second belt get smaller. Thus, even though the first belt 14L has an enough width, a belt tension at the both ends of the belt in the width direction where the belt forming the cross belt layer (i.e., the second belt 14U) does not exist is reduced. Thus, in a distribution of eccentric amount under the load, a relative eccentric amount at the shoulder portion 16 in comparison with a eccentric amount at a portion near the tire center (i.e., at a portion near the tire equator CL) is reduced. Therefore, a leading angle, i.e., an angle between a road surface and a tire land portion in the vicinity of the ground-contact end of the tire becomes smaller. This suppress intakes of water slightly produced due to the ground contact of the tire into the ground contacting plane, thereby making it possible to improve the tire performances such as the driving performance and breaking performance.

The first belt width 1 W is set within the range of 95-102% of the tread width TW. Due to this configuration, the shear rigidity of the belt at the shoulder region is increased, which is beneficial in terms of wear.

### <Second Embodiment>

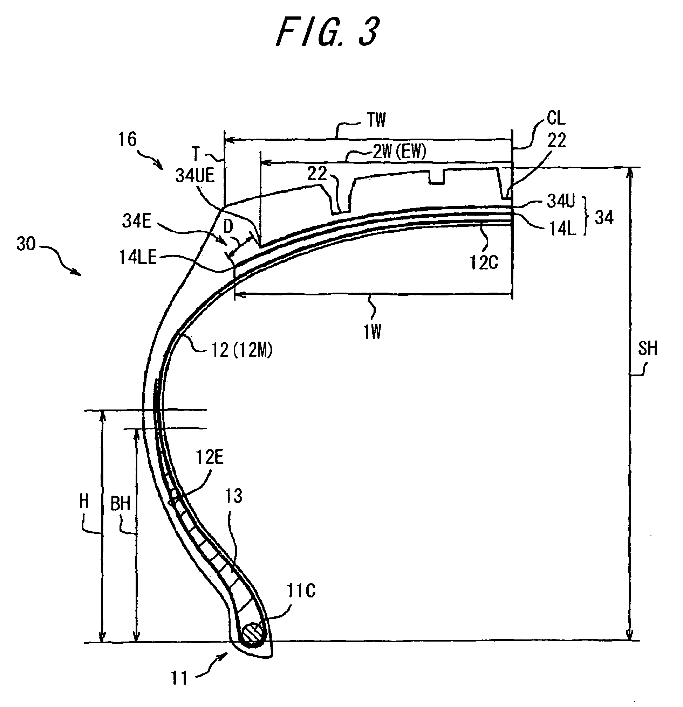

Next, the second embodiment is described. As shown in FIG. 3, a pneumatic tire 30 of present embodiment has a second belt 34U in place of the second belt 14U of the first embodiment. A belt layer 34 of the pneumatic tire 30 is composed of the first belt 14L and the second belt 34U.

The second belt 34U has a smaller width than that of the second belt 14U. In the present embodiment, a proportion of the effective belt width EW with respect to the tread width TW is set smaller than that of the first embodiment. As a result, a distance D between the first belt end 14LE (the end of the first belt 14L in the width direction) and the second belt end 34UE (an end of the second belt 34U in the width direction) is set to 10mm or more.

According to the present embodiment, since water slightly produced due to the ground contact of the tire is less likely to be taken into the ground contacting plane, it is possible to further improve the tire performances such as the driving performance and breaking performance.

It is noted that significant improvements of the performances such as the driving performance and the breaking performance are obtained even if the distance D is 6mm or more instead of 10mm or more.

### <Third Embodiment>

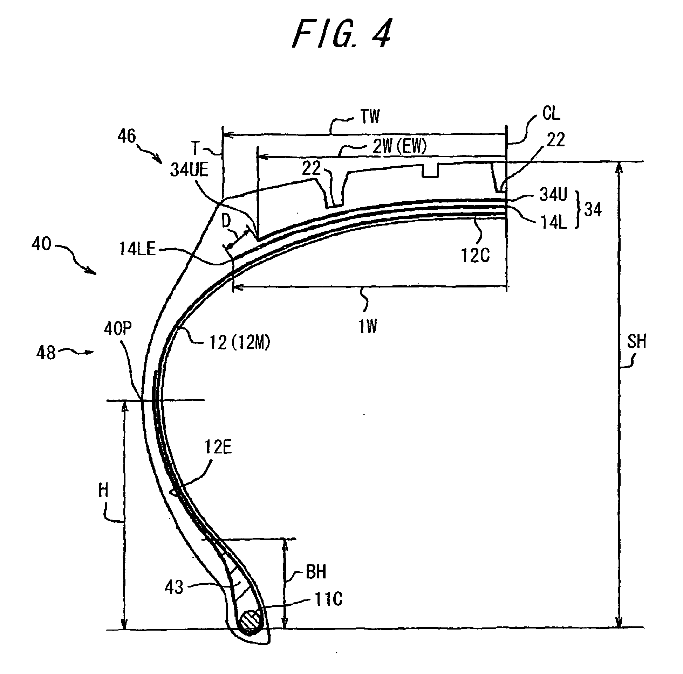

Next, a third embodiment is described. As shown in FIG. 4, a pneumatic tire 40 of the present embodiment differs from the pneumatic tire 30 of the second embodiment in that bead fillers 43 in which each bead filler height BH is set within a range of 15-40% of the tire cross sectional height SH is used in place of the bead fillers 13. That is, the bead filler is downsized.

According to present embodiment, due to the smaller bead filler height BH within the range of 15-40% of the tire cross sectional height SH, the radius of a case line at the tire side portion 48 is enlarged to increase a tension at the side portion, whereby, the belt tension at the shoulder portion 46 is, in turn, decreased. Therefore, with respect to the first embodiment, since water slightly produced due to the ground contact of the tire is less likely to be taken into the ground contacting plane, it is possible to further improve the tire performances such as the driving performance and breaking performance.

The region across which the bead filler 43 lies is within the range of 0.4*H or less, where H is the distance between the tire height position at the tire maximum width position 40P in condition of mounting the tire to the rim and setting the inflation inner pressure as 30 KPa and a rim outer circumference. Therefore, it is possible to amplify the above effect of present embodiment more.

### <Test Example 1>

In order to increase the ground-contact area by optimizing the tire shape, the present inventor prepared test tires whose RRC as a parameter is respectively changed from the viewpoint of optimizing (1) only the tire shape, (2) the tire shape together with the belt angle, and conducted a test for how much increase of the ground-contact area could be made. The term RRC as used herein means a value obtained by dividing a rolling resistance by a road.

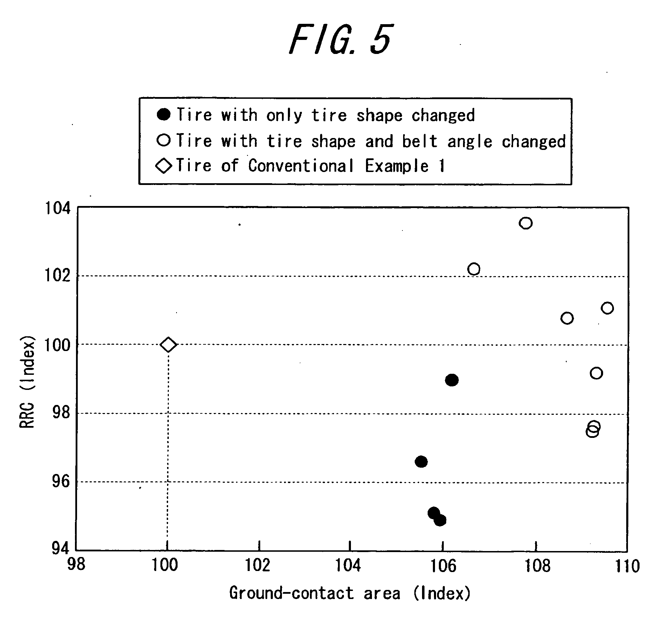

In the present test example, tire size of each tire was 195/65R15, and, with assuming the RRC and the ground contact area of one example of conventional pneumatic tires (hereinafter, referred to as the tire of Conventional Example 1) respectively as an index of 100, each relative index of cases (1) and (2) with respect to the tire of Conventional Example 1 is measured. The test results are shown in FIG. 5.

It can be understood from FIG. 5 that, (1) the optimization of the tire shape alone gives an increase of the ground-contact area by 6-7%, while (2) the optimizations of the tire shape together with the belt angle gives an increase of the ground-contact area up to 9%. It is noted that an optimum belt angle is 56 degrees, and it is preferred that the belt angle is within a range of 45-74 degrees in order to increase the ground-contact area in an efficient fashion.

### <Test Example 2>

In order to verify the effects of the present invention, the present inventor conducted performance tests and evaluated the performances with using one example of the pneumatic tire 10 of the first embodiment (hereinafter, referred to as the tire of Example 1) and the tire of Conventional Example 1, where each tire size is 195/65R 15. Here, in the tire of the Example 1, the effective belt width EW is 94% of the tread width TW, the distance D between the first belt end 14LE and the second belt end 14UE is 5mm, and the first belt width 1W is 100% of the tread width TW. Also, the bead filler height BH is 53mm.

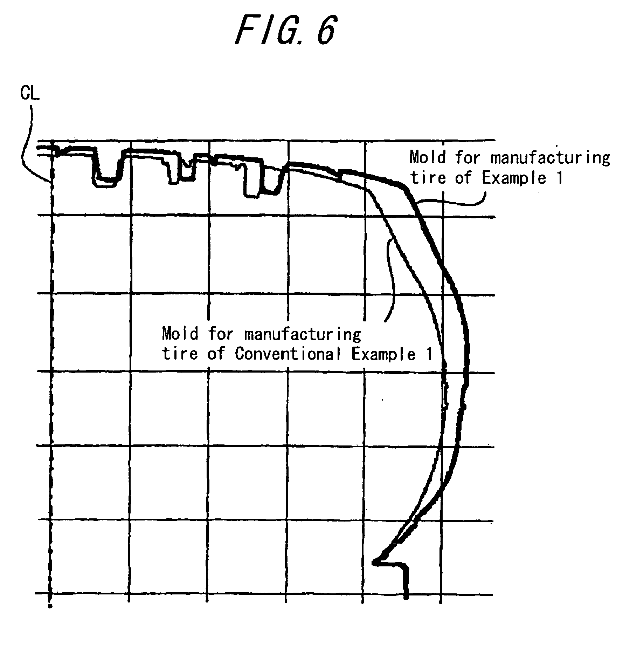

FIG. 6 shows the shape of a mold in the tire radial section depicted as bold line for manufacturing the tire of Example 1 and the shape of a mold in the tire radial section depicted as fine line for manufacturing the tire of Conventional Example 1. The tread width TW of the tire of Example 1 is larger than that of the tire of Conventional Example 1. Measurements of respective tires and other test conditions in the present Test Example are shown in Table 1.

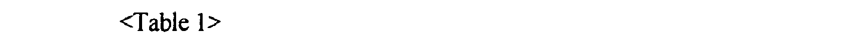

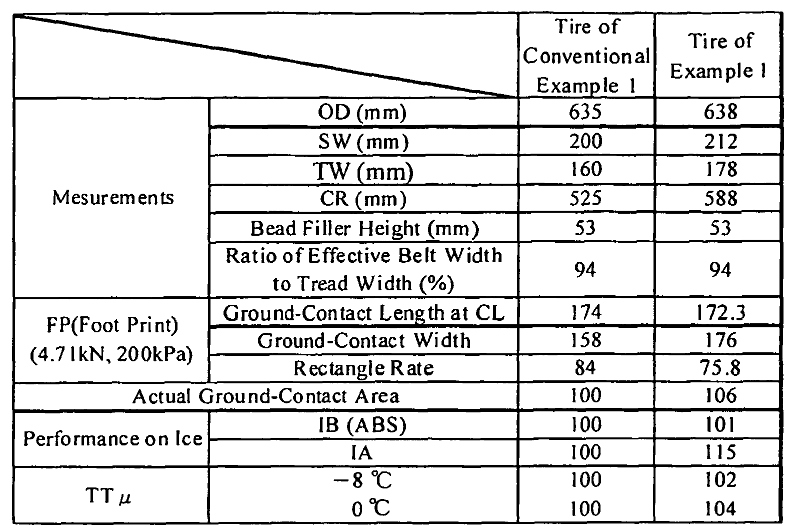

In Table 1, "OD" denotes the outside diameter, and "SW" denotes the maximum width. "TW" denotes the tread width, and "CR" denotes the radius at a crown portion. "FP" denotes the foot print. "IB (ABS) denotes the breaking performance on ice with activating an Anti Lock Brake System, and "IA" denotes the driving performance (accelerating performance) on ice. "TTµ" denotes an indoor friction testing machine.

In present test example, after all of tires are assembled to a regular rim and mounted on a vehicle, the test is conducted under the conditions of a regular internal pressure and a regular load. The term of "regular rim" as used herein refers to the standard rim for an applicable size as specified in the YEAR BOOK of 2006 edition issued by JATMA, for example, and the terms of "regular load" and "regular internal pressure" respectively refer to a maximum load and an air pressure for the maximum load, for the applicable size/ply rating specified as well in the YEAR BOOK of 2006 edition issued by JATMA. When, the TRA Standard or ETRTO Standard is applied in a place of use or manufacture, the definitions shall be conformed to these standards.

In the present Test Example, for carrying out the performance evaluation, with evaluations of the tire of Conventional Example 1 defined as indexes of 100, indexes of the of Example 1 are calculated as the relative evaluation. Evaluated results are shown together in Table 1. In Table 1, the larger the index is, the better performance is. It can be understood from Table 1, with the tire of Example 1, in almost all evaluation items, the each evaluation is respectively exalted in comparison to that of the tire of Conventional Example 1. It is noted that the actual ground-contact area is calculated based on the FP.

In addition, the actual ground-contact area of a tire of Comparative Example as described hereinafter was measured, and it turned out that its actual ground-contact area was larger than that of the tire of Conventional Example 1 and smaller than that of the tire of Example 1.

### <Test Example 3>

The present inventor manufactured tires having the tire size of 195/65R15 according to the pneumatic tire 30 of the second embodiment with varying effective belt width EW as a parameter.

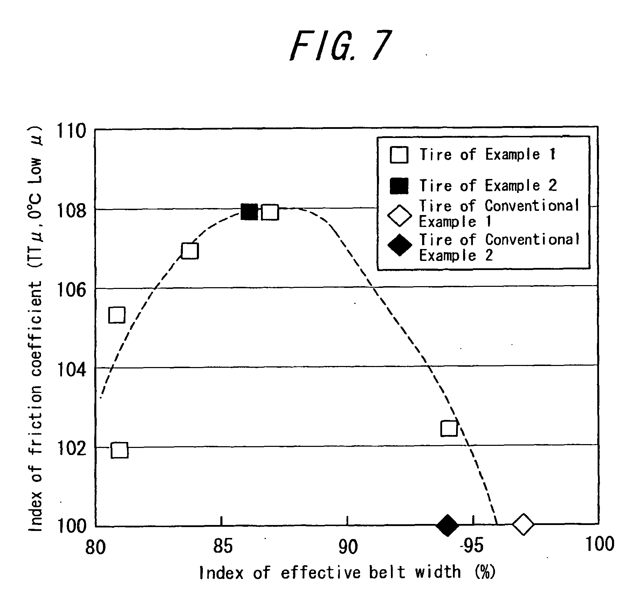

Then, with assuming the effective belt width EW and the friction coefficient (TTµ, 0 °C lowµ) on ice of the tire of Conventional Example 1 respectively as an index of 100, the friction coefficient at each the effective belt width is measured as the relative index with respect to that of the tire of Conventional Example 1. The calculated results are shown in FIG. 7. Here, the index of the effective belt width depicted as transverse in FIG. 7 refers to an index of a proportion to the effective belt width of the tire of Conventional Example 1.

It can be understood from FIG. 7 that the pneumatic tire 30 of the second embodiment having the tire size of 195/65R15 is expected to have the maximum µat the effective width EW being within 85-90 %.

Also, the present inventor measured the friction coefficient (TTµ, 0°C lowµ) on ice of other example of conventional pneumatic tire in tire size of 205/65R15 (hereinafter, referred to as the tire of Conventional Example 2), and set this friction coefficient as an index of 100. Then, the present inventor manufactured tire having the tire size of 205/65R15 according to the pneumatic tire 30 of the second embodiment, in which the effective belt width EW is in the vicinity of 85% of the tread width TW, and measured the friction coefficient of this tire on ice as relative index with respect to the tire of Conventional Example 2. The test results are together shown in FIG. 7.

It can be understood from FIG. 7, with the pneumatic tire 30 of the second embodiment, even when the tire size is 205/65R15, it is expected that the µ is maximized at the effective width EW being in vicinity of 85% of the tread width TW.

### <Test Example 4>

In addition, the present inventor, for tires each having the size of 205/65R15, conducted performance tests and evaluated the performances with using one example of the pneumatic tire 10 of the second embodiment (hereinafter, referred to as the tire of Example 2) and the tire of Conventional Example 2. Here, in the tire of the Example 2, the bead filler height BH is 53mm. The distance D between the first belt end 14LE and the second belt end 34UE is approximately 15mm, and the effective belt width EW is 85%.

The measurements of respective tire and other test conditions are shown in Table 2.

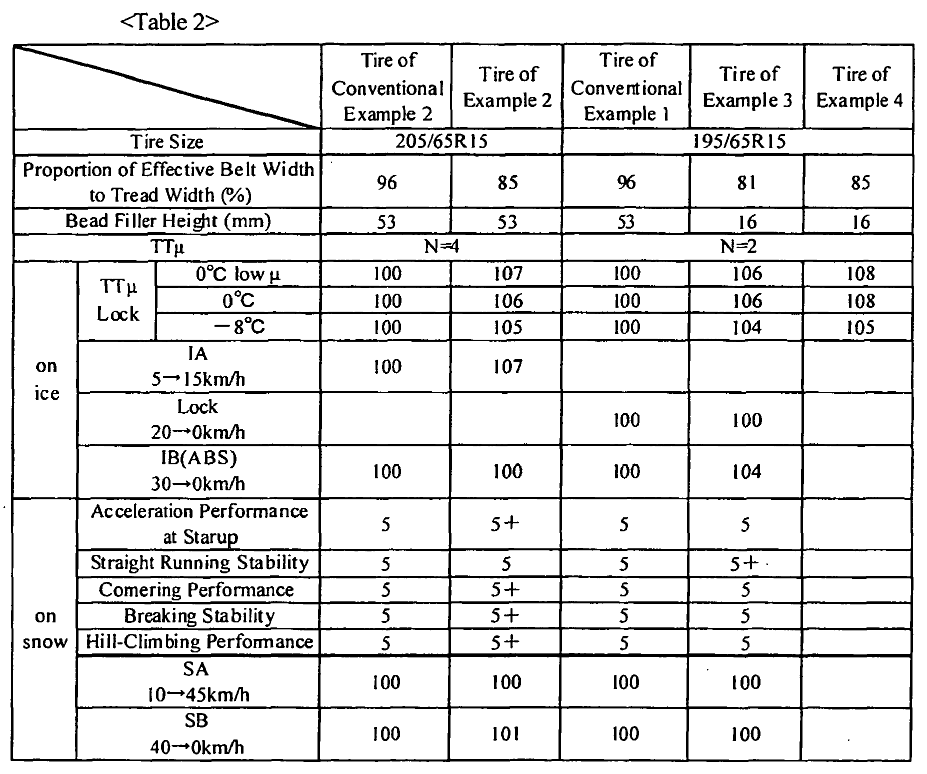

In Table 2, the meanings "IA", "IB" and "ABS" are respectively same as above descriptions (the descriptions in Test Example 2). The term of Lock means that the test had been conducted in condition of the tire being locked not to rotate. The term of SA means the acceleration performance on ice, the term of SB means the breaking performance on snow. The term of "0°C low µ" means a road surface in which the friction coefficient is low due to an existence of large volume of water on the ice road surface at 0°C. It is noted that blanks mean date is not taken.

In the present test example, after all of tires are assembled to the regular rim and mounted on the vehicle, and the test is conducted under the conditions of the regular internal pressure and the regular load. Results of the evaluations are shown together in Table 2.

As to the performance evaluations as shown in Table 2, the each evaluation item filled with "100" of the tire of Conventional Example 1 refers to index of the tire of Example 2 calculated as relative evaluation, when the rating index of the tire of Conventional Example 2 is set as a reference value of 100. The each evaluation item as filled with other than "100" refers to the rating index obtained by driver's feeling test. In each evaluation item, the larger the index is, the better performance is.

In addition, the present inventor, for tires each having tire size of 195/65R15, conducted performance tests and evaluated the performances with using two examples of the pneumatic tire 40 of the third embodiment (hereinafter, referred to as the tire of Example 3, the tire of Example 4) and the tire of Conventional Example 1. Here, in the tire of the Example 3, the effective bead width EW is 81% of the tread width TW, the bead filler height BH is 16mm, the bead filler height is 25% of the tire cross sectional height SH, and the distance D between the first belt end 14LE and the second belt end 34UE is 15mm. In the tire of Example 4, the effective tread width EW is 85% of the tread width TW, and conditions other than this are same as those of the tire of the Example 3. The measurements of respective tire and other test conditions, and evaluation results are together shown in Table 2.

As is the case with 205/65R15, as to the performance evaluations as shown in Table 2, the each evaluation item filled with "100" of the tire of Conventional Example 1 refers to the indexes of the tires of Example 3 and 4 calculated as relative evaluation, when the evaluation index of the tire of Conventional Example 1 is set as the reference value of 100. The each evaluation item as filled with other than "100" refers to the rating index obtained by driver's feeling test. In each evaluation item, the larger the index is, the better performance is.

It can be understood from Table 2, with the tire of Example 2, in almost all evaluation items, the evaluations are exalted in comparison to those of the tire of Conventional Example 2. With the tire of Example 3, in almost all evaluation items, the evaluations are exalted in comparison to those of the tire of Conventional Example 1. With the tire of Example 4, although only the performance of "TTµ" is tested, in all items (three items) as tested, evaluations are exalted in comparison to those of the tire of Conventional Example 1. In the condition of 0°C in vicinity (0°C low µ) that water is most likely to appear on the ice road surface, the friction coefficient (µ) is significantly improved.

### <Test Example 5>

For the tire of Conventional Example 2 and the tire of Example 2 applied the regular internal pressure, the present inventor respectively measured an eccentric amount at each position in the tire width direction. In addition, the present inventor prepared a pneumatic tire for comparison (hereinafter, referred to as the tire of Comparative Example), applied the regular internal pressure, and measured the eccentric amount of that at each position in the tire width direction, as well. Here, the tire of Comparative Example has the conditions in that, the tire size is 205/65R15, the proportion of the effective belt width EW to the tread width TW equal to that of the tire of Conventional Example 2, an inner layer is provided, and the bead filler height is within the range of 15-40% of the tire cross sectional height.

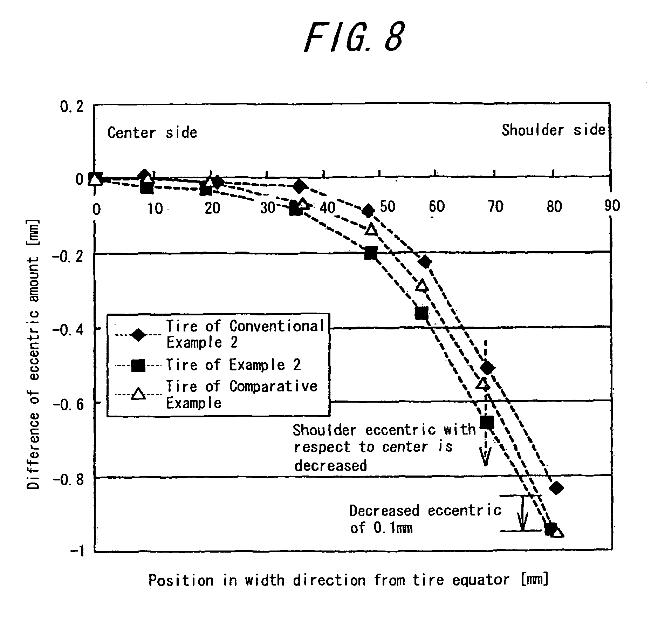

Measured results are shown in FIG. 8. In FIG. 8, a difference of the eccentric amount with respect to that of the tire center (the tire equator) is depicted.

It can be understood from FIG. 8, in both of the tire of the Example 2 and the tire of Comparative Example, the difference of the eccentric amount at shoulder end was decreased relative to that of the tire of Conventional Example 2.

### <Test Example 6>

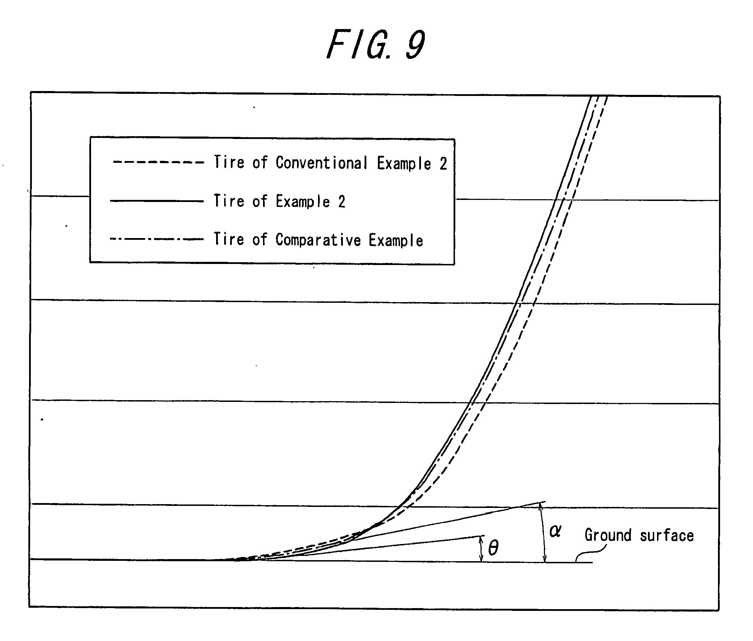

For the tire of Conventional Example 2, the tire of Example 2, and the tire of Comparative Example, the present inventor measured the leading angle (at a tread-in side, an angle of a ground-contact end portion to the tire the road surface in the tire circumferential direction) with applying the regular internal pressure and the regular load to those tires. Measured results are shown in FIG. 9.

It can be understood from FIG. 9, at the shoulder portions, the leading angle θ of the tire of Example 2 is smaller than the leading angle α of the tire of Conventional Example 2. The leading angle of the tire of Comparative Example is almost same as the leading angle θ of the tire of Example 2. The reason for this is assumed that, in the tire of Example 2 and the tire of Comparative Example, an eccentric deformation at the shoulder portion is respectively smaller than that of the tire of Conventional Example 2.

It is noted that, when a kicking angle at a tire trailing side was also measured as well, the trailing angles of the tire of Example 2 and the tire of Comparative Example were smaller than that of the tire of Conventional Example 2.

### <Test Example 7>

For the tire of Conventional Example 2, the tire of Example 2, and the tire of Comparative Example, the present inventor conducted tests with running a passenger vehicle on a normal load not on ice or snow, and evaluated the tire performances by driver's feeling. The evaluated results are shown in Table 3.

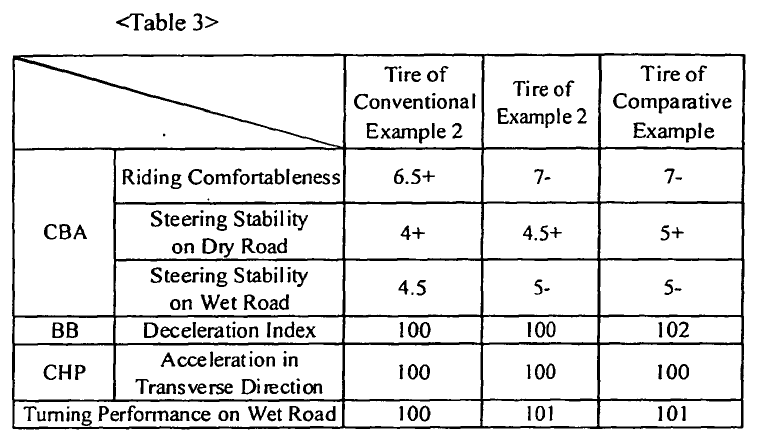

In Table 3, the riding comfortability, the steering stability on dry road, and the steering stability on wet road are shown as an absolute value. In the deceleration, the acceleration in the transverse direction, and the turning performance on wet road, with the rating index of the tire of Conventional Example 2 as 100, indexes of the tire of Example 2 and the tire of Comparative Example are shown as the relative evaluation. In the absolute value and the relative evaluation, the larger the index is, the better performance is.

It can be understood from Table 3, with the tire of Example 2 and the tire of Comparative Example, in almost all evaluation items, the evaluations are exalted in comparison to those of the tire of Conventional Example 2.

### <Test Example 8>

For the tire of Conventional Example 2, and the tire of Example 2, the present inventor conducted wear test with the vehicle running on the normal load not on ice or snow, and evaluated the tire performances by measuring wear amount. The measured result and evaluated result are shown in Table 4.

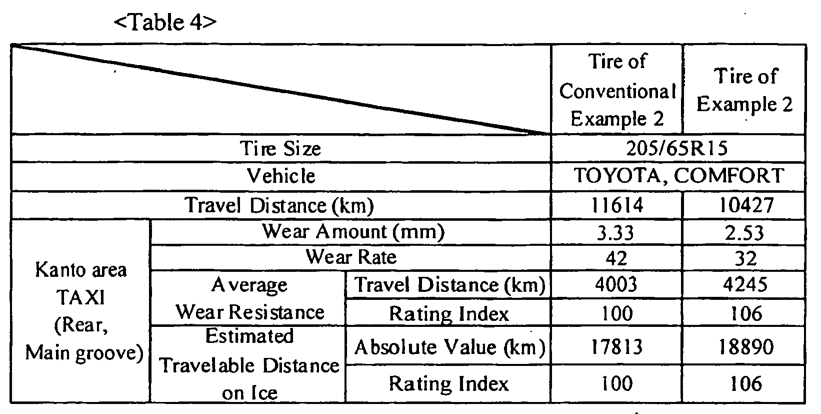

In Table 4, as to the performance evaluation, the larger the value is, the better performance is. It can be understood from Table 4, in relating to both of the average wear resistance (i.e., refers to a degree of wearing averagely not unevenly) and the estimated travelable distance on ice, the evaluations of the tire of Example 2 are higher than those of the tire of Conventional Example 2.

### <Test Example 9>

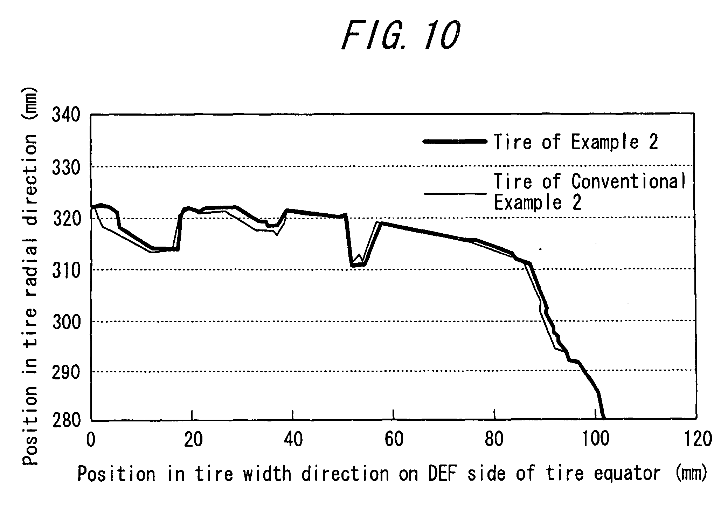

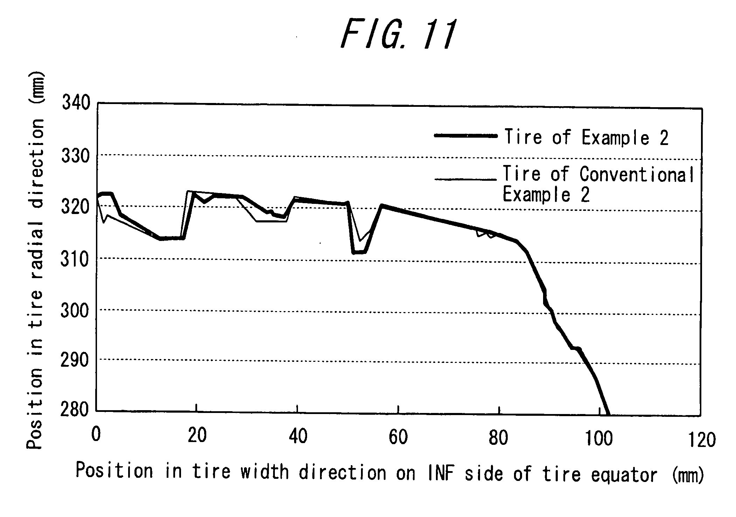

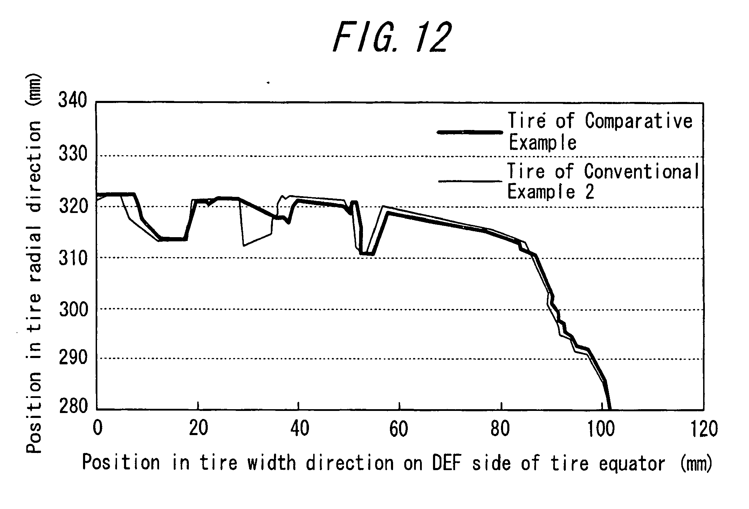

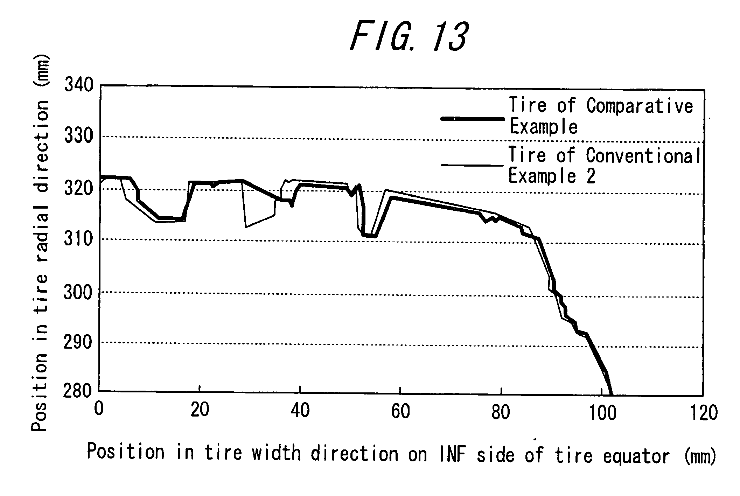

The present inventor measured how much the shapes of the tire of Example 2 and the tire of Comparative Example change relative to that of the tire of Conventional example 2, with using laser beam. Measured results are shown in FIG. 10 -FIG. 13 (4 drawings).

It can be understood from FIG. 10 -FIG. 13, the shapes of the tire of Example 2 and the tire of Comparative Example are respectively almost same as that of tire of Conventional Example 2.

### <Test Example 10>

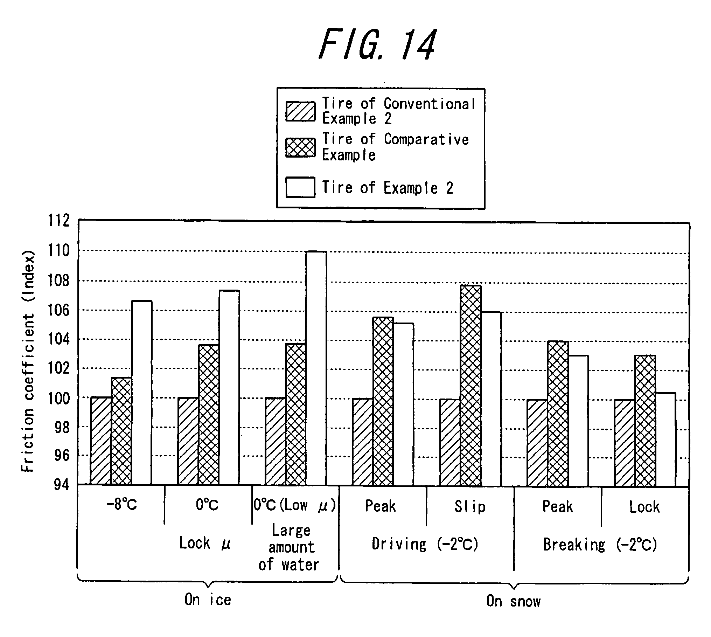

The present inventor conducted a test to examine how much the friction coefficient against the ice road or snow road of the tire of Example 2 and the tire of Comparative Example is increased relative to that of tire of Conventional Example. In the present test, with the rating index of the tire of Conventional Example 2 under each road condition as reference value of 100, indexes of the tire of Example 2 and the tire of Comparative Example are calculated as the relative evaluations. The test result is shown in FIG. 14. In FIG. 14, the higher the rating index is, the better performance is, in other words, the higher the friction coefficient is.

As shown in FIG. 14, in any road conditions, each the friction coefficient of the tire of Example 2 and the tire of Comparative Example is higher than that of the tire of Conventional Example. It can be also understood from FIG. 14, especially in the tire of Example 2, at the condition of 0°C in vicinity ("0°C low µ) that water is most likely to appear, the friction coefficient is significantly improved.

### <Test Example 11>

The present inventor prepared the tires each having the tire size of 175/65R14 in which the distance between the first belt end and the second belt end is changed into 5mm, 6mm, 7.5mm, 10mm, and 15mm as parameter, and measured the friction coefficient (TTµ, 0°C low µ) on the ice road. Then, with the rating index of tire in which the distance between the first belt end and second belt end is 5mm as 100, each index of other tires was calculated as the relative evaluation.

In addition, the present inventor prepared the tires having tire size of 155/70R13 in which the distance between the first belt end and the second belt end is changed into 5mm, 6mm, 7.5mm, 10mm, and 15mm as parameter, and measured the friction coefficient (TTµ, 0°C low µ) on ice the road. Then, with the rating index of tire in which the distance between the first belt end and second belt end is 5mm as 100, each index of other tires was calculated as the relative evaluation. It is referred that the higher the index is, the better performance is, in other words, the higher the friction coefficient on ice road is.

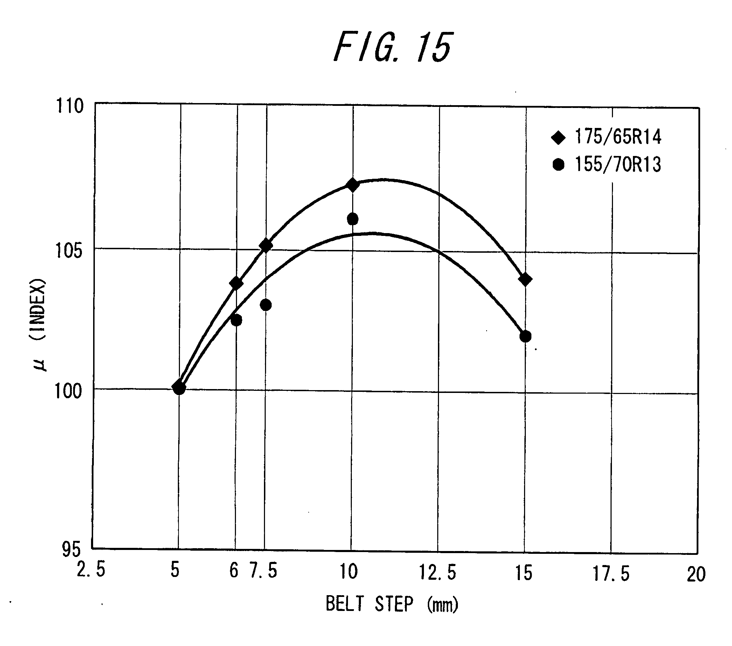

Test result (evaluated result) is shown in FIG. 15. It can be understood from FIG. 15, in the tire in which the distance between the first belt end and second belt end is 6mm, the friction coefficient on the ice road is improved 3% relative to that of the distance between the first belt end and the second belt end being 5mm, therefore, it is realized that the friction coefficient is a significant increased. It is also realized that spacing of 10mm with each other is more preferably.

### <Test Example 12>

The present inventor prepared a tire in which a tread rubber has 30MPa of E' (dynamic elastic modulus) and a tire in which a tread rubber has 50MPa of E', for each tires, the ground-contact area is respectively measured at 52.1 Hz of frequency, 1.0% of amplitude, 0°C of temperature. As a result, there is no much difference of the ground-contact area as compared the tread rubber having 30MPa of E' and the tread rubber having 50MPa of E'. Meanwhile, it is realized that, with the E' as 20MPa, since the tread rubber is soft, the increase of the ground-contact area of the tread is remarkable due to the reduction of the belt tension at the shoulder portion. When the E' is smaller, the increase of the ground-contact area of the tread due to the reduction of the belt tension at shoulder portion can be confirmed. However, the E' should be at least 3MPa in order to secure the function as the tread rubber of tire. Therefore, it is expected that, in the present invention, when the tread rubber in which the E' is less than 30MPa is applied to the ice and snow tire, the great effect is provided.

The present invention has been described with reference to the embodiments, however, these embodiments are only one example among many, various changes may be made without departing from the scope of the appended claims.

## Claims

1. A pneumatic tire having a two-belt structure (14), wherein a width of a first belt (14L) is larger than a width of a second belt (14U),
the width (2W) of the second belt is within a range of 80-95% of a tread width (TW), and
a dynamic elastic modulus of a tread rubber is within a range of 3-20MPa.

2. The pneumatic tire according to claim 1, wherein the width of the second belt is within a range of 83-90% of the tread width.

3. The pneumatic tire according to claim 1, wherein the width (1W) of the first belt (14L) is within a range of 95-102% of the tread width (TW).

4. The pneumatic tire according to claim 1, wherein a first belt end (14LE) and a second belt end (14UE) are spaced by 6mm or more.

5. The pneumatic tire according to claim 4, wherein the first belt end and the second belt end are spaced by 10mm or more.

6. The pneumatic tire according to claim 1, wherein a bead filler height (BH) is within a range of 15-40% of a tire cross sectional height (5H).

## Patentansprüche

1. Luftreifen mit einer Doppelgürtelstruktur (14), wobei eine Breite eines ersten Gürtels (14L) größer ist als eine Breite eines zweiten Gürtels (14U),
die Breite (2W) des zweiten Gürtels von 80 bis 95% einer Laufflächenbreite (TW) ausmacht, und
das dynamische Elastizitätsmodul eines Laufflächengummis in einem Bereich von 3 bis 20 MPa liegt.

2. Luftreifen nach Anspruch 1, wobei die Breite des zweiten Gürtels von 83 bis 90% der Laufflächenbreite ausmacht.

3. Luftreifen nach Anspruch 1, wobei die Breite (1W) des ersten Gürtels (14L) von 95 bis 102% der Laufflächenbreite (TW) ausmacht.

4. Luftreifen nach Anspruch 1, wobei ein Ende des ersten Gürtels (14LE) und ein Ende des zweiten Gürtels (14UE) 6 mm oder mehr voneinander entfernt sind.

5. Luftreifen nach Anspruch 4, wobei das Ende des ersten Gürtels und das Ende des zweiten Gürtels 10 mm oder mehr voneinander entfernt sind.

6. Luftreifen nach Anspruch 1, wobei eine Höhe des Wulstfiillstoffs (BH) im Bereich von 15 bis 40% einer Höhe des Reifenquerschnitts (SH) liegt.

## Revendications

1. Bandage pneumatique ayant une structure à deux ceintures (14), dans lequel une largeur de la première ceinture (14L) est plus grande qu'une largeur de la deuxième ceinture (14U),
la largeur (2W) de la deuxième ceinture constitue entre 80 et 95% d'une largeur de bande de roulement (TW), et
un module d'élasticité dynamique d'une gomme de bande de roulement est compris entre 3 et 20 MPa.

2. Bandage pneumatique selon la revendication 1, dans lequel la largeur de la deuxième ceinture constitue entre 83 et 90 % de la largeur de bande de roulement.

3. Bandage pneumatique selon la revendication 1, dans lequel la largeur (1W) de la première ceinture (14L) constitue entre 95 et 102 % de la largeur de bande de roulement (TW).

4. Bandage pneumatique selon la revendication 1, dans lequel une extrémité de la première ceinture (14LE) et une extrémité de la deuxième ceinture (14UE) sont espacées de 6 mm ou plus.

5. Bandage pneumatique selon la revendication 4, dans lequel l'extrémité de la première ceinture et l'extrémité de la deuxième ceinture sont espacées de 10 mm ou plus.

6. Bandage pneumatique selon la revendication 1, dans lequel une hauteur du bourrage sur tringle (BH) constitue entre 15 et 40 % d'une hauteur de section transversale du bandage (SH).
